# EUROPEAN PATENT APPLICATION

(11) **EP 1 806 897 A1**
(43) Date of publication of application: **11.07.2007**
(21) Application number: 06013282.6
(22) Date of filing: 27.06.2006
(51) Int. Cl.: H04L 29/06, H04L 12/28, H04L 12/56

(54) **Wireless security setup between station and access point supporting MSSID**

(30) Priority: 10.01.2006 US 306739
(71) Applicant: Zyxel Communications Corporation, Hsien, Hsin chu (TW)
(72) Inventor: Tsai, Hsiu-Ping, Chi-Lung City (TW); Peng, Yang-Hung, Hsin-Chu Hsien (TW); Lee, Hung-Wei, Yunghe City Taipei Hsien (TW)
(74) Representative: Hager, Thomas Johannes

(57) **Abstract**

A method of wireless security setup is introduced. The method includes a station transmitting a first packet containing a first SSID and related information; an access point (100) transmitting a second packet containing the first SSID to inform that the connection between the station and the first SSID is built; the station transmitting a third packet by the connection with the first SSID to ask for an SSID other than the first SSID and related information; the access point (100) transmitting a fourth packet containing a second SSID and the related information using the first SSID in response to the third packet; the station transmitting a fifth packet containing the second SSID and the related security information; and the access point (100) transmitting a sixth packet containing the second SSID to inform the station that the connection between the station and the second SSID is built.

## Description

The present invention relates to a method of wireless security setup according to the pre-characterizing clause of claim 1, 10 and 17.

Conventionally, each access point advertises its presence several times per second by broadcasting beacon packets that carry the unique SSID it adopts. Stations can discover access points for a WLAN by passively listening to the beacon packets.

In the prior art, another method of WLAN security setup was brought up in order to reduce the complexity procedure to set up a security WLAN environment. In this conventional method, the user of a station attempting to make a connection to an AP first triggers the access point and his own station. The AP then broadcasts packets that carry the unique SSID and the security information it adopts in response to the trigger, and the station of the user listens to the packets that carry the adopted SSID of the access point after being triggered and updates the security setting according to the received packets from the access point. Afterward, the wireless connection between the access point and the station can be established, and the stations are able to start the communication with the access point. In this manner, the access point delivers the security setting in response to a trigger. That means, the access point broadcasts information of the security settings only in response to the trigger (on AP), and the station can setup the security setting according to the broadcast security information from AP, and the user no need to do the setting and the security wireless environment set automatically. However, the radio capacity is saved accordingly. Nevertheless, all normal packet traffic between the AP and all stations served by the AP is still suspended when the AP is broadcasting packets carrying the security setting, while the broadcast is possibly lasting for at least a few minutes. Further, the user needs to trigger the AP and the station manually, which is obviously an inconvenience to the user.

This in mind, the present invention aims at providing a method of wireless security setup that achieves a quick and convenient wireless security setup between a station and an access point.

This is achieved by a method of wireless security setup according to claim 1,10 and 17. The dependent claims pertain to corresponding further developments and improvements.

As will be seen more clearly from the detailed description following below, the claimed method of wireless security setup adopts a mechanism of multiple SSID and reserves one SSID for stations to require for establishing connections.

In the following, the invention is further illustrated by way of example, taking reference to the accompanying drawings. Thereof
Fig. 1 is a block diagram illustrating an access point that supports multiple SSIDs and a plurality of stations;
Fig. 2 is a block diagram illustrating a station transmitting a packet containing a preserved SSID;
Fig. 3 is a block diagram illustrating an access point transmitting a packet containing a preserved SSID;
Fig. 4 is a block diagram illustrating a station transmitting a request packet;
Fig. 5 is a block diagram illustrating the access point transmitting a response packet having a designated SSID and its security information to the station;
Fig. 6 is a block diagram illustrating the station transmitting a request packet containing the designated SSID and related security information to ask for connection;
Fig. 7 is a block diagram illustrating the access point transmitting a response packet containing the designated SSID to inform the station that the connection is built;
Fig. 8 is a flow chart of a first embodiment of the present method of wireless connection setup; and
Fig. 9 is a flow chart of a second embodiment of the present method of wireless connection setup.

In order to setup wireless security settings between an access point and wireless stations without suspending the packet traffic, a structure of multiple service set identifiers (MSSID) is adapted here in the present invention. Each of the SSIDs supported by a single AP has an individual security setting. Usually there is one SSID utilized for primary service, and the others may contain some different features. Under the multiple SSIDs structure, users of WLAN are allowed to access different networks or networks of different security settings through a single access point that supports multiple SSIDs. In the method of the present invention, one SSID among the multiple SSIDs supported by an access point is specially and only in charge of delivering beacon frames carrying special information, e.g., the designated SSID, in response to requests from stations.

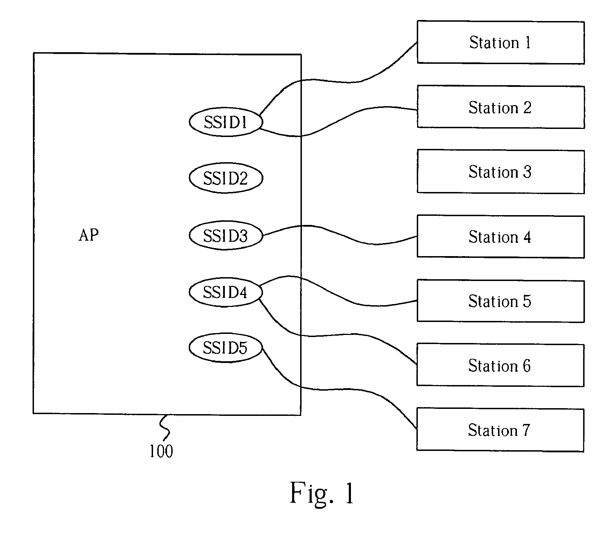

Please refer to Fig. 1. Fig. 1 is a block diagram illustrating an access point that supports multiple SSIDs and a plurality of stations. As shown in Fig. 1, the access point 100 supports five SSIDS: SSID 1, SSID 2, SSID 3, SSID 4, and SSID 5. Station 1 and station 2 are wirelessly connected with the AP 100 using SSID 1, station 4 is wirelessly connected with the AP 100 using SSID 3, station 5 and station 6 are wirelessly connected with the AP 100 using SSID 4, and station 7 is wirelessly connected with the AP 100 using SSID 5. It is evident that only station 3 has not got connected with the AP 100. For AP 100, SSID 2 is reserved for connection setup. In the present invention, verified stations attempting to get wireless network service are given a predetermined SSID and related security settings of the predetermined SSID to send the request of connection to the AP. in the embodiment displayed in Fig. 1, though station 3 has not connected with the AP 100 and does not have any valid SSID values to set up the connection, station 3 is equipped with the knowledge of the preserved SSID 2 from the driver or by manual setting.

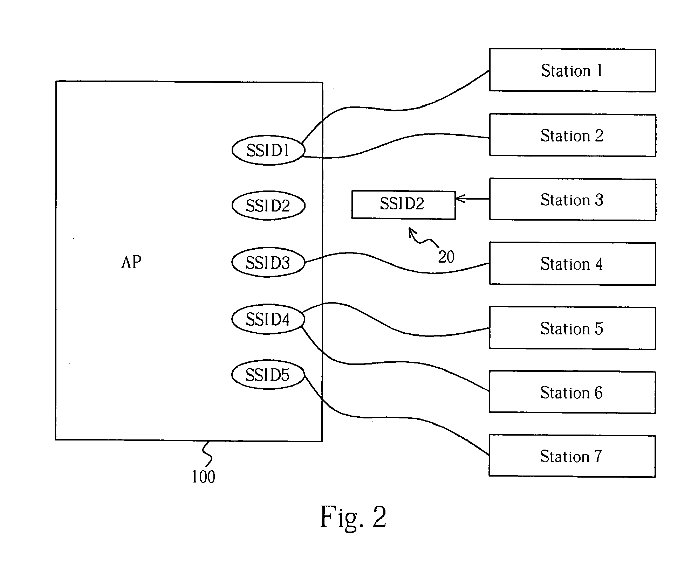

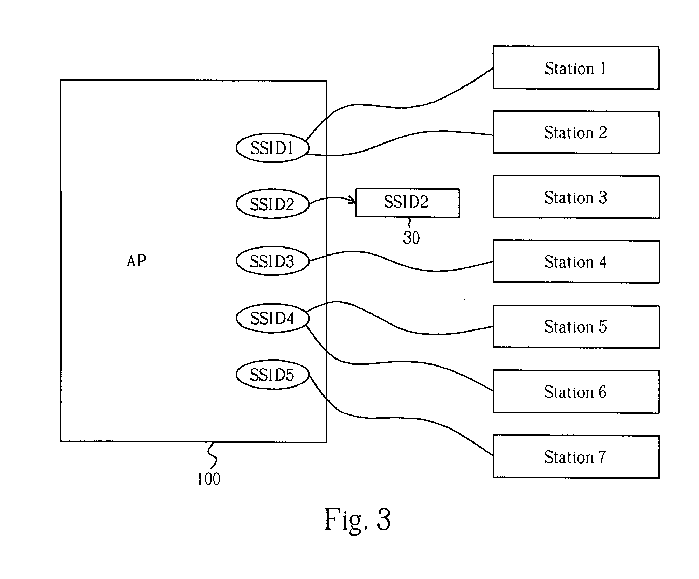

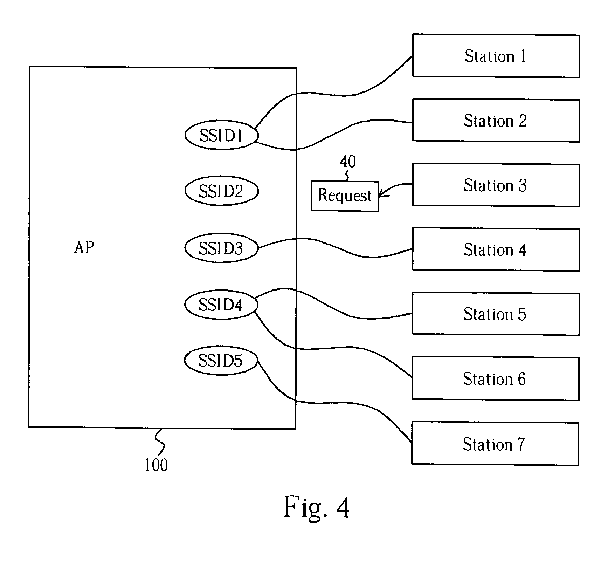

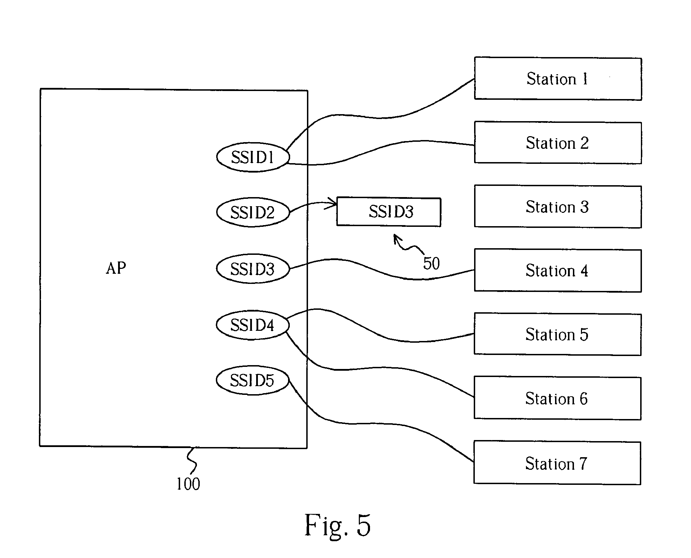

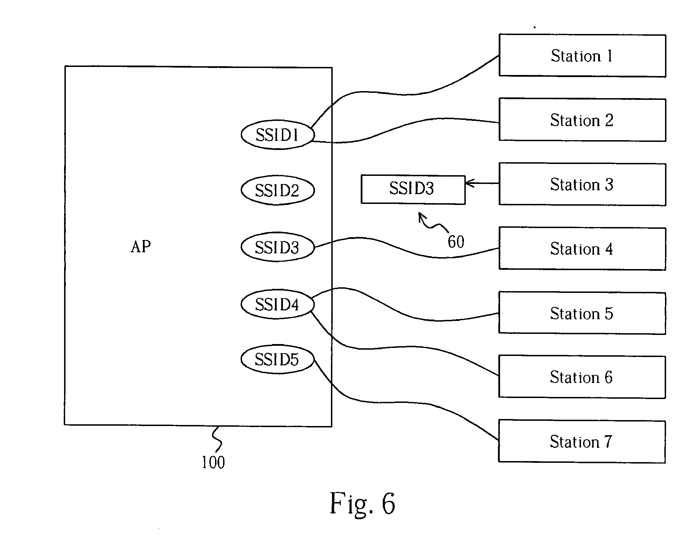

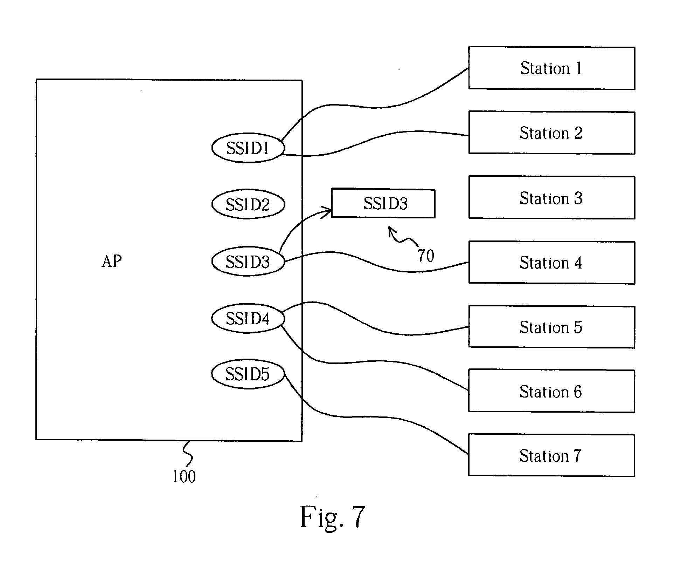

Please refer to Fig. 2. In the present procedure of connection setup, station 3 transmits a request packet 20 containing SSID 2 and related security information, which is known by station 3 originally. The AP 100 receives the packet 20 and recognizes the information of SSID2 contained in the packet 20. Receiving and recognizing the packet 20, AP 100 affirms station 3 as a valid station for SSID 2. Please refer to Fig. 3. In response to the request packet 20, The AP 100 uses SSID 2 to transmit a response packet 30 containing SSID 2 to inform the station 3 that the connection between station 3 and SSID2 is built. Please refer to Fig. 4. Station 3 transmits a request packet 40 by the connection with SSID 2 to ask a secure SSID and related information. Please refer to Fig. 5. In response to the request packet 40, the AP 100 sends a response packet 50 designating SSID 3 and the security information, such as the security mode and the keys, to station 3 for further wireless network connection. The access point 100 transmits the response packet 50 containing SSID 3 and related security setting after receiving the request packet 40. Please refer to Fig. 6. After receiving the response packet 50 from AP 100, station 3 transmits a request packet 60 containing SSID 3 and related security information given by AP100 to ask for connection. The AP 100 receives the packet 60 and recognizes the information of SSID3 contained in the packet 60. After receiving and recognizing the packet 60, AP 100 affirms station 3 as a valid station for SSID 3. Please refer to Fig. 7. In response to the request packet 60, the AP 100 transmits a response packet 70 containing SSID 3 to inform the station 3 that the connection between station 3 and SSID3 is built. Afterwards, access point 100 and station 3 can communicate to each other using SSID 3.

As described above, the communications between the AP 100 and the other stations using SSIDs other than SSID 2 are continuing while the AP 100 is using SSID 2 to transmit the response packet 50. Therefore, it is achieved in the present invention that the original connections and communications between the AP and the other stations are not interrupted by the connection setup procedure of the new-joined station. Station 3 may transmit the request packet 20 to the AP 100 automatically after failing to get connected to the AP 100, or station 3 may transmit the request packet 20 when being manually triggered in a hardware manner or a software manner. Either way, the AP 100 transmits the response packet 30 automatically in response to the request packet.

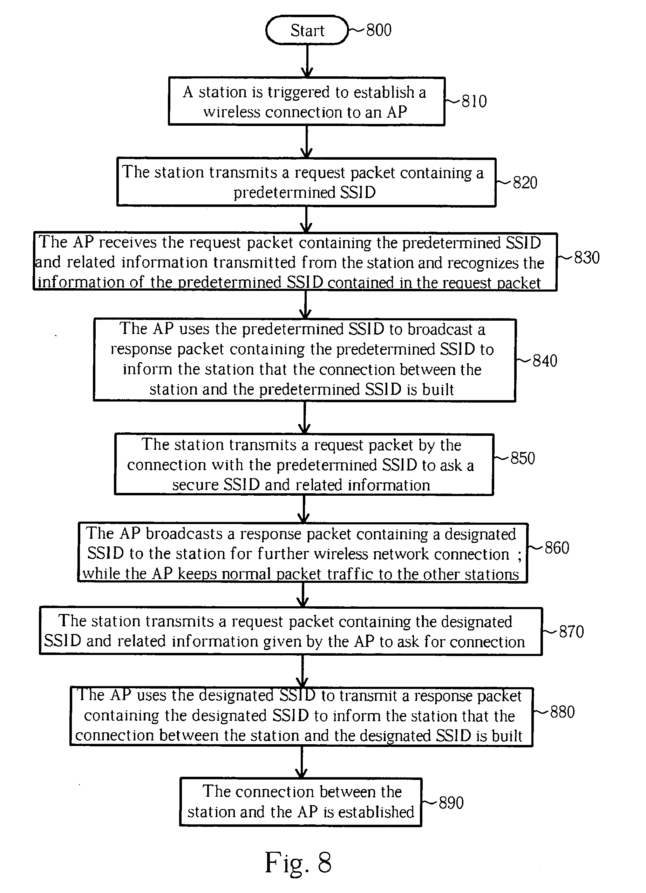

Fig. 8 is a flow chart of a first embodiment of the present method of wireless connection setup. In this embodiment, the station requires for the security setting after it has been triggered.
Step 800: Start;
Step 810: A station is triggered to establish a wireless connection to an AP;
Step 820: The station transmits a request packet containing a predetermined SSID and related security information;
Step 830: The AP receives the request packet containing the predetermined SSID and related security information transmitted from the station and recognizes the information of the predetermined SSID contained in the request packet;
Step 840: The AP uses the predetermined SSID to transmit a response packet containing the predetermined SSID to inform the station that the connection between the station and the predetermined SSID is built;
Step 850: The station transmits a request packet by using the security information and the connection with the predetermined SSID to ask a secure SSID and related information;
Step 860: The AP transmits a response packet containing a designated SSID and related security information to the station for further wireless network connection; while the AP keeps normal packet traffic to the other stations;
Step 870: The station transmits a request packet containing the designated SSID and related information given by the AP to ask for connection;
Step 880: The AP transmit a response packet containing the designated SSID to inform the station that the connection between the station and the designated SSID is built;
Step 890: The connection between the station and the AP is established.

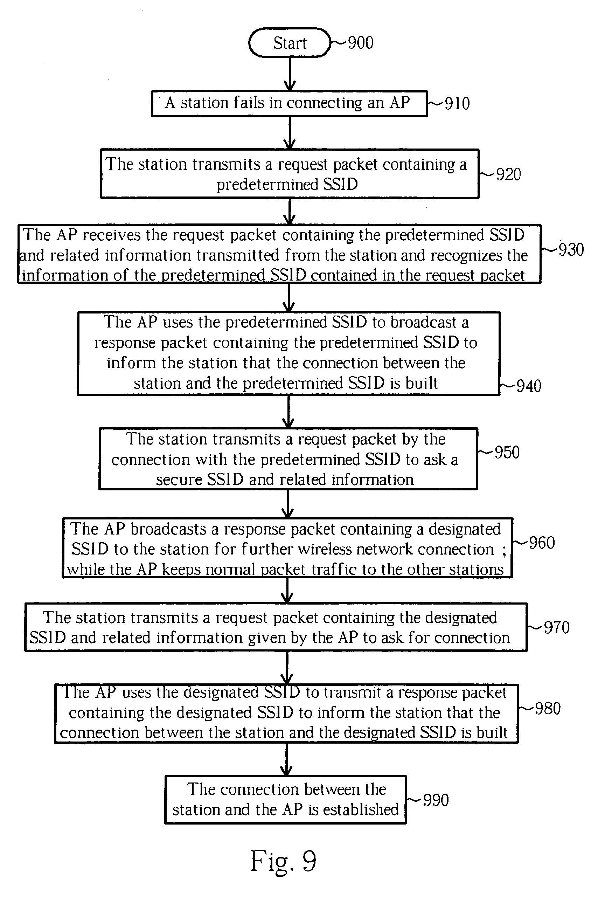

Fig. 9 is a flow chart of a second embodiment of the present method of wireless connection setup. In this embodiment, the station requires for the security setting when the station has failed in establishing connections with the AP.
Step 900: Start;
Step 910: A station fails in connecting an AP;
Step 920: The station transmits a request packet containing a predetermined SSID and the related security information;
Step 930: The AP receives the request packet containing the predetermined SSID and related information transmitted from the station;
Step 940: The AP uses the predetermined SSID to transmit a response packet containing the predetermined SSID to inform the station that the connection between the station and the predetermined SSID is built;
Step 950: The station transmits a request packet by using the security information and the connection with the predetermined SSID to ask a secure SSID and related information;
Step 960: The AP transmits a response packet containing a designated SSID and the related security information to the station for further wireless network connection; while the AP keeps normal packet traffic to the other stations;
Step 970: The station transmits a request packet containing the designated SSID and related information given by the AP to ask for connection;
Step 980: The AP transmits a response packet containing the designated SSID to inform the station that the connection between the station and the designated SSID is built;
Step 990: The connection between the station and the AP is established.

The method of the present invention speeds up the procedure of wireless security setup primarily. With the method of wireless security setup introduced in the present invention, the established packet traffic between the AP and the other stations are not suspended during the time that the AP broadcasts the designated SSID and the related security setting to the station that requires connecting.

Secondarily, the simplified procedure brought by the present invention makes security setups achievable for common users. Due to the complexity of security setting, usually the security settings of most access points are turned off in default. Hence the users can connect their stations with the access points without problems but with dangers to security conventionally. With the present method of wireless security setup, the security settings of access points can be turned on since it is easy and convenient for the access points to deliver security settings to stations.

In summary, the present method of wireless security setup achieves a quick and convenient wireless security setup between a station and an access point. With knowledge of a predetermined SSID value reserved for connection establishment, the station can ask an access point for designating an SSID to use. The reserved SSID value may be given in the driver of the station, or valid users may obtain the reserved SSID value and set the reserved SSID value manually in advance. In addition, the access point that adopts the present invention can save transmission power since the time for beacon broadcasting packets is reduced. The claimed method of security setup may be applied to various kinds of wireless systems, such as WLAN, wherein the stations may include computer terminals, mobile phones, and personal digital assistants.

## Claims

1. A method of wireless security setup, the method comprising:
a station transmitting a first packet containing a first service set identifier (SSID) and related information;
an access point (100) transmitting a second packet using the first SSID in response to the first packet, the second packet containing the first SSID to inform the station that the connection between the station and the first SSID is built;
**characterized by**:
the station transmitting a third packet by the connection with the first SSID to ask for an SSID other than the first SSID and related security information;
the access point (100) transmitting a fourth packet using the first SSID in response to the third packet, the fourth packet containing a second SSID and the related security information;
the station transmitting a fifth packet containing the second SSID and the related security information; and
the access point (100) transmitting a sixth packet in response to the fifth packet, the sixth packet containing the second SSID to inform the station that the connection between the station and the second SSID is built.

2. The method of claim 1 **characterized in that** the related information of an SSID comprises the related security mode and keys of the SSID.

3. The method of claim 1 **characterized in that** the first packet is a request packet requiring for establishing connection with the access point (100) using the first SSID.

4. The method of claim 1 **characterized in that** the fifth packet is a request packet requiring for establishing connection with the access point (100) using the second SSID.

5. The method of claim 1 **characterized by** the access point (100) transmitting packets using an SSID other than the first SSID to another station while the access point (100) transmitting the second packet using the first SSID.

6. The method of claim 1 **characterized by** triggering the station wherein the station transmitting the first packet is the station transmitting the first packet in response to the triggering.

7. The method of claim 1 **characterized in that** the station transmitting the first packet after the station fails to establish a connection with the access point (100).

8. The method of claim 1 **characterized by** the access point (100) deciding the second SSID.

9. The method of claim 1 **characterized in that** the first SSID is a known SSID and the related information is know as well.

10. A method for a station to set up wireless connection with an access point (100), the method comprising:
the station transmitting a first packet containing a first SSID and related information;
the station receiving a second packet from the access point (100) informing that the connection with the first SSID is built;
**characterized by**:
the station transmitting a third packet by the connection with the first SSID to ask an SSID other than the first SSID and related security information;
the station receiving a fourth packet containing a second SSID and the related security information from the access point (100);
the station transmitting a fifth packet containing the second SSID and the related security information; and
the station receiving a sixth packet from the access point (100) informing that the connection with the second SSID is built.

11. The method of claim 10 **characterized in that** the related information of an SSID comprises the related security mode and keys of the SSID.

12. The method of claim 10 **characterized in that** the first packet is a request packet requiring for establishing connection with the access point (100) using the first SSID.

13. The method of claim 10 **characterized in that** the fifth packet is a request packet requiring for establishing connection with the access point (100) using the second SSID.

14. The method of claim 10 **characterized in that** the station transmitting the first packet is the station transmitting the first packet in response to a trigger.

15. The method of claim 10 **characterized in that** the station transmitting the first packet after the station fails to establish a connection with the access point (100).

16. The method of claim 10 **characterized in that** the first SSID is a known SSID and the related information is know as well.

17. A method for an access point (100) to set up wireless connection with a station, the method comprising:
the access point (100) receiving a first packet containing a first SSID and related information from the station;
the access point (100) transmitting a second packet using the first SSID in response to the first packet, the second packet containing the first SSID to inform the station that the connection between the station and the first SSID is built;
**characterized by**:
the access point (100) receiving a third packet by the connection with the first SSID from the station wherein the third packet asks for an SSID other than the first SSID and related security information;
the access point (100) transmitting a fourth packet using the first SSID in response to the third packet, the fourth packet containing a second SSID and the related security information;
the access point (100) receiving a fifth packet containing the second SSID and the related security information from the station; and
the access point (100) transmitting a sixth packet in response to the fifth packet, the sixth packet containing the second SSID to inform the station that the connection between the station and the second SSID is built.

18. The method of claim 17 **characterized in that** the related information of an SSID comprises the related security mode and keys of the SSID.

19. The method of claim 17 **characterized in that** the first packet is a request packet requiring for establishing connection with the access point (100) using the first SSID.

20. The method of claim 17 **characterized in that** the fifth packet is a request packet requiring for establishing connection with the access point (100) using the second SSID.

21. The method of claim 17 **characterized by** the access point (100) transmitting packets using an SSID other than the first SSID to another station while the access point (100) transmitting the second packet using the first SSID.

22. The method of claim 1 7 **characterized by** the access point (100) deciding the second SSID.

23. The method of claim 17 **characterized in that** the first SSID is a known SSID and the related information is know as well.
